# EUROPEAN PATENT SPECIFICATION

(11) **EP 1 282 793 B1**
(45) Date of publication and mention of the grant of the patent: **28.12.2005**
(21) Application number: 01932483.9
(22) Date of filing: 18.05.2001
(51) Int. Cl.: F16J 15/12

(54) **METHOD FOR MANUFACTURING AN ELASTIC SEALING RING AND SEALING RING MANUFACTURED ACCORDING TO THE METHOD**
HERSTELLUNGSVERFAHREN FÜR EINEN ELASTISCHEN DICHTRING SOWIE NACH DIESEM VERFAHREN HERGESTELLTER DICHTRING
PROCEDE DE FABRICATION D'UNE BAGUE D'ETANCHEITE ELASTIQUE ET BAGUE D'ETANCHEITE FABRIQUEE CONFORMEMENT AUDIT PROCEDE

(30) Priority: 19.05.2000 SE 0001874
(43) Date of publication of application: 12.02.2003
(73) Proprietor: KUNGSÖRS PLAST AB, 736 22 Kungsör (SE)
(72) Inventor: ANDERSSON, Thomas, S-736 32 Kungsör (SE)
(74) Representative: Axelsson, Rolf
(86) International application number: PCT/SE2001/001113
(87) International publication number: WO 2001/090609

(56) References cited:
- EP-A1- 0 007 832
- EP-A1- 0 326 719
- WO-A1-98/26916
- DE-A1- 3 339 939
- US-A- 3 511 685
- US-A- 4 410 185

## Description

### FIELD OF THE INVENTION

The present invention relates to a method for manufacturing an elastic sealing ring for sealing between a displaceable and/or rotatable component, such as a piston, piston rod, shaft etc., and a surrounding component, such as a cylinder block, a cylinder end wall etc., which sealing ring is adapted so as to be mounted in a groove in one component and has at least one sealing surface intended for bearing against the other component.

The invention also relates to an elastic sealing ring manufactured by means of the method according to the invention.

### BACKGROUND OF THE INVENTION

Sealing rings of the type indicated above are used in many situations, inter alia as hydraulic seals for pistons and piston rods. One application is as a wiper for piston rods, their task being to prevent dirt or other impurities from, for example, accompanying a piston rod into a hydraulic cylinder. They can also be used on rotating shafts which may be, for example, axially displaceable.

Another application is as a pressure seal between a piston rod and a cylinder end wall in order to prevent leakage of pressure fluid from the cylinder. A similar application is as a piston seal in order to bring about sealing between a displaceable piston and a surrounding cylinder block.

Piston rod wipers and pressure seals for piston rods are commonly used together. Conventionally, however, they have been made and mounted as two separate components. One of the reasons for this is that an elastic sealing ring, which is usually made of polyurethane, must be so soft/elastic that good sealing and bearing against the piston rod are obtained. A disadvantage of this is that the risk of gap extrusion, that is to say material being forced out into the gap between the two components which are to be sealed relative to one another, is relatively great. As the entire seal body is also made of the same relatively elastic material, the friction against the piston rod increases, the temperature in the seal material then increasing, which in turn reduces the rigidity and brings about a further increase in. friction and temperature, and so forth.

In order to prevent gap extrusion, pressure seals for piston rods and piston seals are supplemented by support rings made of relatively hard plastic material, which prevent the soft polyurethane seal material being forced out into the gap. This makes manufacture, mounting and maintenance more expensive and complicated.

In wipers for piston rods, the sealing rings serving as wipers have commonly been provided with a sheet-metal surround in order to bring about secure mounting of the relatively elastic polyurethane ring in a groove in the surrounding block.

### THE OBJECT OF THE INVENTION

One object of the present invention is to produce sealing rings for piston rods and pistons, in which inter alia the risk of detrimental friction heating and gap extrusion has been eliminated or greatly reduced.

This makes it possible inter alia for the sealing rings to be mounted without separate support rings, which makes manufacture, mounting and maintenance of the seals considerably easier and less expensive.

The invention is based on the knowledge (see for example EP 0 326 719) that this aim can be achieved by manufacturing a sealing ring by injection-molding two materials with different properties, so that a core made of a first material is obtained, which is surrounded by a thin layer of a second material with in part other properties.

In this connection, the inner material is to be sufficiently elastic in order to give the sealing ring the dynamic properties which are required for good flexibility and sealing action. This inner core material is surrounded by a thin layer of an outer material with low friction, which inter alia reduces friction heating of the seal material. Such heating otherwise reduces the rigidity of the seal material, which increases the risk of gap extrusion. In order further to reduce this risk, the outer layer can be made of a harder material than the core.

The especially characteristic features of a method according to the present invention are defined in claim 1.

By means of this method, it is possible to produce a sealing ring with lower friction heating of the seal material, which in itself reduces the risk of gap extrusion. The material in the outer layer can also be selected so that the tendency toward gap extrusion is further reduced.

It is preferred that, as said second material, a material is injected which gives lower friction on contact with a component bearing against it than the first material, the second material preferably having a greater hardness than the first material.

The materials can be injected into a mold which produces a dish-shaped blank, the peripheral outer edge portion of the blank being essentially V-shaped or U-shaped with two sealing lips for forming a pressure seal for a piston rod or the like, the sprue dish being cut away, so that the other end of the annular product obtained is shaped to form a piston rod wiper lip.

By means of this method, a combined wiper and pressure seal is therefore produced, which can be both manufactured and mounted in a single corresponding operational step without the use of separate support rings or the like.

The especially characteristic features of an elastic sealing ring manufactured according to the present invention emerge from the patent claims below.

The invention will be described in greater detail below with reference to the embodiments shown by way of example in the accompanying drawings.

### BRIEF DESCRIPTION OF THE DRAWING FIGURES

Fig. 1 illustrates known art for sealing a hydraulic piston with a piston rod.
Fig. 2 shows a part of a blank for a wiper according to the present invention.
Fig. 3 shows a part of a blank for a piston rod seal according to the invention.
Fig. 4 shows a part of a blank for a combined piston rod seal and wiper according to the invention.
Fig. 5 illustrates the sealing of a hydraulic piston with a piston rod using sealing rings according to the invention.

### DETAILED DESCRIPTION OF PREFERRED EMBODIMENTS

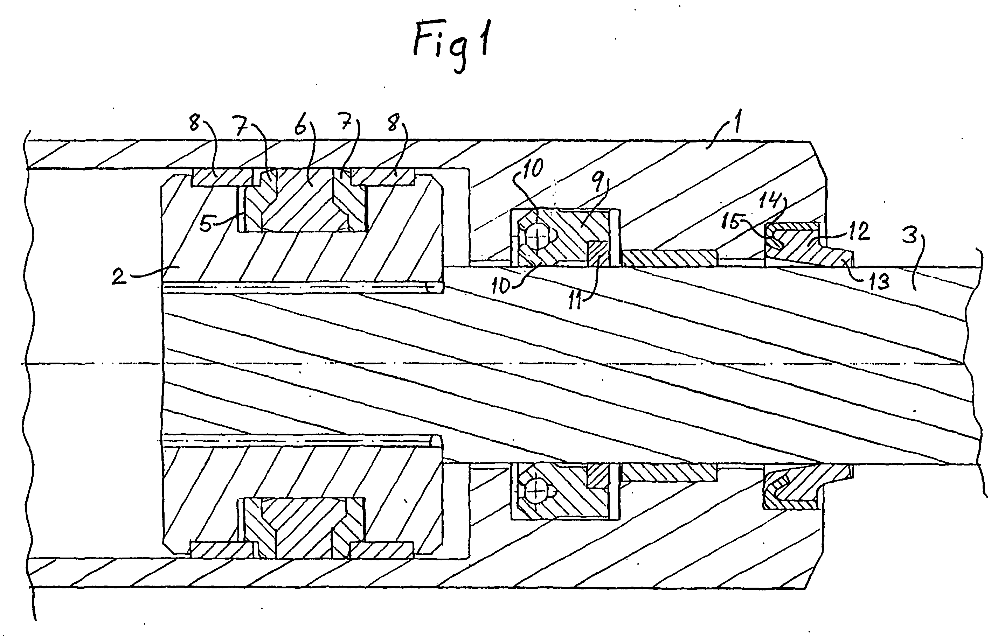

In Fig. 1, which shows known art, reference number 1 designates a cylinder block and 2 a piston which is displaceable in the block and has a piston rod 3 projecting through the end wall of the block. The piston 2 is provided with an elastic sealing ring 6 made of an elastomer, suitably a polyurethane material, arranged in a groove 5. To bring about the necessary sealing, the polyurethane material must be relatively soft, which involves risks of gap extrusion, that is to say the risk that the seal material will be pressed into and crushed in the gap between the piston 2 and the surrounding cylinder block 1. For this reason, the sealing ring 3 is supported on both sides by means of a pair of support rings 7 made of hard plastic material. Reference number 8 designates two guides for keeping the piston 2 centered in the cylinder.

The piston seal therefore consists overall of a number of components which have to be manufactured and mounted separately, which increases costs. The relatively soft material in the sealing ring 6 also results in increased friction which inter alia increases friction heating etc. All in all, this increases the risk of the seal material being damaged on account of friction heating.

Reference number 9 designates a so-called U packing ring which forms a pressure seal in order to prevent hydraulic oil from being pressed out from the cylinder along the piston rod 3. The pressure seal has two sealing lips 10 which will be pressed apart by the hydraulic pressure and then bring about good sealing of the piston rod 3. For this reason, the pressure seal 9 also has to be made of a relatively soft seal material with the attendant risk of detrimental friction heating. Furthermore, a support ring 11 is required in order to reduce the risk of gap extrusion as mentioned above.

Reference number 12 relates to what is known as a piston rod wiper with an annular wiper lip 13 bearing against the piston rod 3. This prevents dirt and other impurities from accompanying the piston rod into the hydraulic cylinder. To function well, the wiper 12 also has to be manufactured from a relatively soft seal material. On mounting in an open groove 14 in the cylinder end wall, a sheet-metal surround 14 is usually embedded in the wiper, which can be pressed firmly into the groove 14 by means of a press fit.

In order inter alia to avoid the high friction of previously used sealing rings manufactured from a soft seal material throughout with the attendant friction heating and risk of gap extrusion, sealing rings for inter alia piston rod wipers, piston rod seals and piston seals are manufactured according to the present invention by double injection of two plastic materials with in part different properties. In this way, it is possible to produce sealing rings with an outer layer with relatively low friction in order inter alia to reduce friction heating and the risk of gap extrusion, and with a softer inner core which gives the sealing ring the necessary flexibility and adaptability so as to provide good sealing action. In order further to reduce the risk of gap extrusion, the outer layer is made of a harder material than the core.

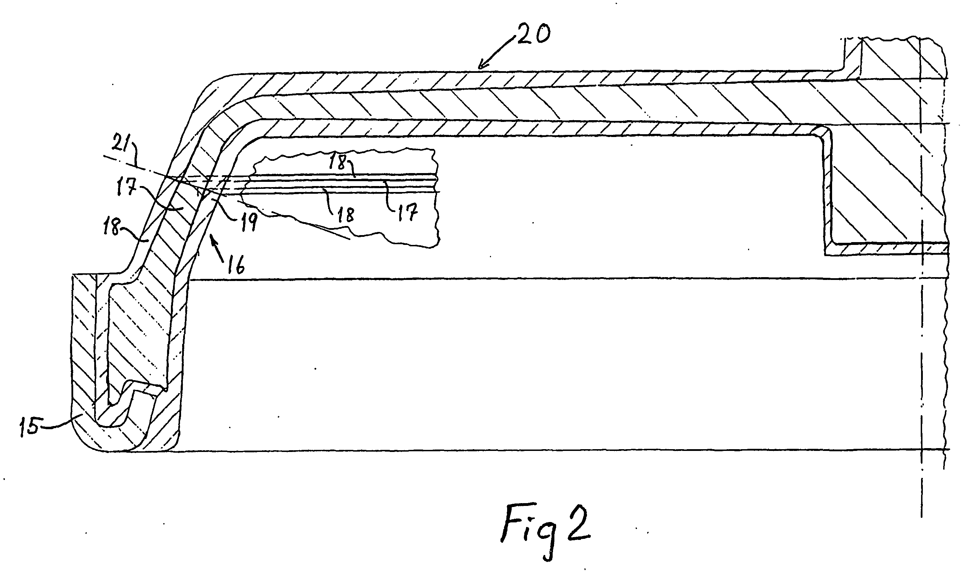

Fig. 2 shows a section through one half of a dish-shaped blank, produced in a mold by double injection, for a piston rod wiper 16 according to the present invention. The blank has an inner core 17 made of a relatively elastic seal material, for example of polyurethane with a hardness of 40-70° Shore D, preferably roughly 50-60° Shore D. The core 17 is surrounded by a relatively thin outer layer 18 with a thickness of the order of 0.2-0.6 mm, preferably roughly 0.4 mm. The outer layer also suitably consists of a polyurethane material which, however, is harder than the material in the core 17 and has a hardness of the order of 85-95° Shore D, preferably roughly 90-93° Shore D. This harder outer layer results in low friction against the piston rod and thus low friction heating as well. On account of the softer core 17, however, good flexibility and adaptability of the sealing ring are obtained for maintaining a good sealing function.

The blank shown is manufactured by sequential injection-molding of the two plastic materials into a mold. In this connection, the harder material, which is to form the outer layer 18 of the sealing ring, is injected first. Then, the material for the core 17 is injected centrally into the mold, this material, when injected, forcing the material injected first out against the delimiting surfaces of the mold cavity, so that the latter material will form an outer layer 18 which surrounds the softer material in the core 17.

If the wiper is to be provided with a sheet-metal surround 15, such a surround is positioned in the mold before the plastic materials are injected, so that it will be molded integral with the outer layer 18.

After mold removal, the sprue dish 20 formed is cut off along an angled cutting line 21, so that a cut surface as illustrated in the figure is obtained. The outer layer 18 on the inner surface of the ring will then form a sealing lip 19 which bears against a piston rod which is guided through the sealing ring. This means that it is the harder material in the outer layer 18 which bears against the piston rod, which results in reduced friction and thus reduced friction heating in comparison with previously known wipers. The flexibility of the wiper lip 19 will be retained, however, on account of the softer material in the core 17 of the wiper ring.

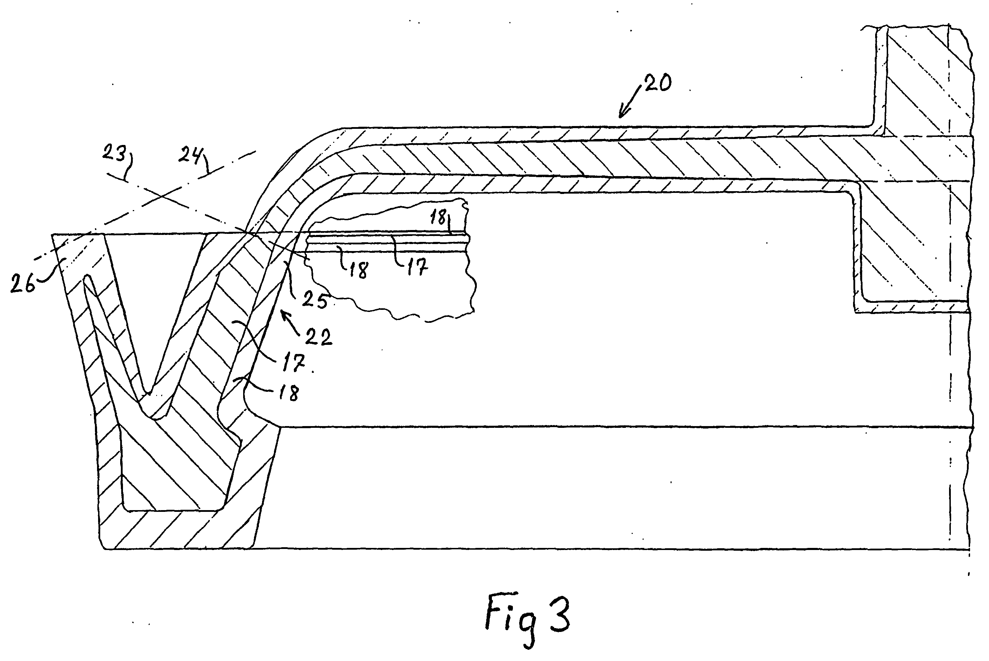

Fig. 3 illustrates in a corresponding manner one half of a blank for a piston rod seal 22 after mold removal. As in Fig. 2, the blank consists of a core 17 made of a soft plastic material, which is surrounded by an outer layer 18 made of a harder material. The sprue dish 20 is cut away, and the two end portions of the V-shaped sealing collar are chamfered along the lines 23 and 24. In this way, a sealing lip 25 with the cross section shown bearing against a piston rod guided through the collar, and a sealing lip 26 bearing against the bottom in a groove in a surrounding cylinder end wall are formed.

The pressure from the hydraulic oil in the cylinder will penetrate the V shape between the sealing lips 25 and 26 and press these away from one another to bear in a sealing manner against the piston rod and, respectively, the cylinder block. In both cases, the bearing part of the sealing lip consists of the outer harder material 18, but the sealing lip still has good flexibility on account of the inner, softer core 17.

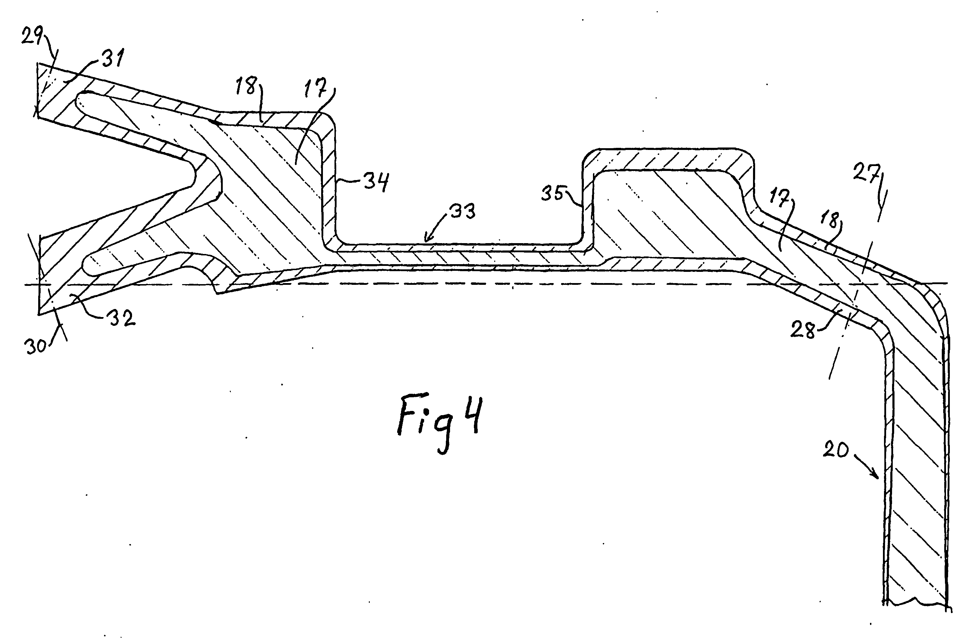

Fig. 4 illustrates a blank for a combined piston rod wiper and piston rod seal. As previously, the blank is constructed from a relatively flexible core 17 and a harder outer layer 18. The sprue dish 20 is cut off along a cutting line 27 to form a piston rod wiper lip 28, as described above in connection with Fig. 2. At the other end, the end portions of the blank are chamfered along the lines 29 and 30 to form sealing lips 31 and 32 for bearing against a surrounding cylinder block and, respectively, a piston rod.

The part serving as the piston rod wiper is connected to the part serving as the piston rod seal via a relatively thin portion 33 which barely fills the gap present between the piston rod and the cylinder end wall. This portion and the shoulder surfaces 34 and 35 delimiting it make it possible for the combined seal and wiper to be anchored securely in the cylinder block. On account of the hard material in the outer layer 18, the risk is also eliminated of the seal material in the piston seal penetrating the gap between the piston and the cylinder end wall, which is also to a great extent filled by the material portion 33.

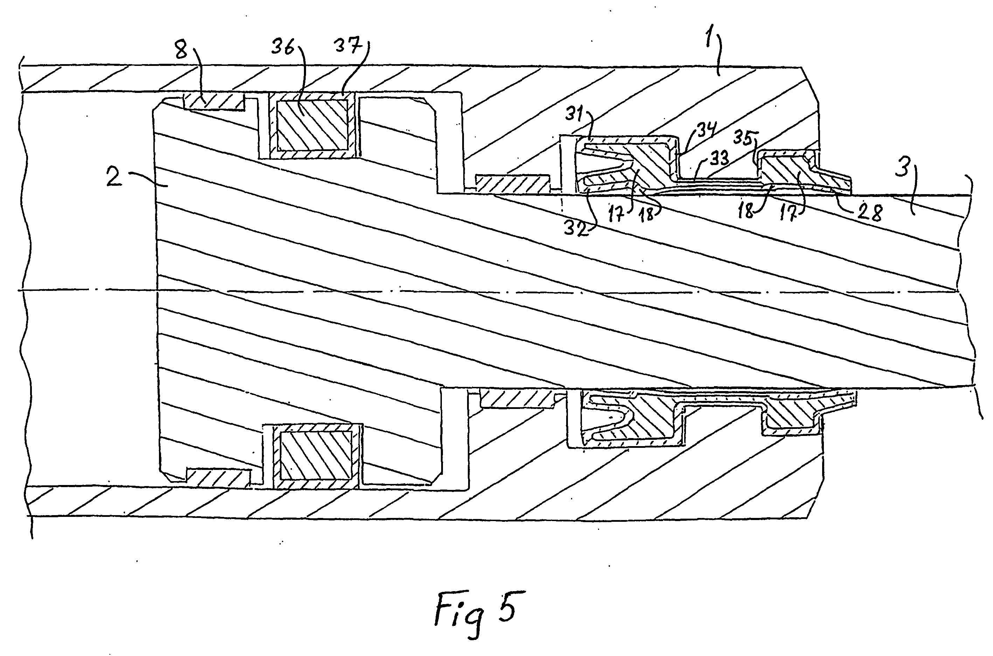

The fitting of the combined seal shown in Fig. 4 can be seen in Fig. 5 which shows the application of sealing elements according to the invention in a hydraulic cylinder of the same type as is shown in Fig. 1.

As previously, the reference numbers 1, 2 and 3 relate to a cylinder block, a piston and, respectively, a piston rod which projects through the cylinder block. The reference numbers 8 relate to guides for the piston 2 and the piston rod 3.

Arranged between the end wall of the cylinder block 1 and the piston rod 3 is a combined sealing element according to Fig. 4. This comprises a wiper lip 28 which bears against the piston rod 3, and a piston rod seal with a sealing lip 32 for bearing against the piston rod 3 and a sealing lip 31 for bearing against the bottom surface of a groove in the cylinder end wall. The sealing lips 31 and 32 are pressed away from one another on account of hydraulic oil entering the V-shaped space between these sealing lips.

By virtue of the fact that the sealing element according to the above is manufactured with a softer core and a harder outer layer, a sealing element is obtained with low friction and low friction heating but which still has the necessary flexibility for bringing about good sealing action. Manufacture and mounting are made easier and less costly, as it is necessary to handle only one element without a requirement for extra support rings or equivalent.

In the same way, the piston seal is made with a softer core 36 and a harder outer layer 37. This affords the same advantages as indicated in connection with the piston rod seal and means that no extra support rings for preventing gap extrusion are required. This means lower costs for the piston seal as well, as inter alia separate support rings do not have to be manufactured, mounted or maintained.

Another advantage is that sealing rings according to the invention can be made in undivided form, as the elasticity is sufficient for it to be possible for these to be pulled onto, for example, a piston or a piston rod. The support rings used previously had to be mounted in sections as they were too inelastic to be slipped onto, for example, a piston.

The lower friction of the outer layer results in itself in a reduced risk of gap extrusion on account of lower friction heating and thus a smaller reduction in the rigidity of the material. In this connection, the outer layer can consist of the same material as the core but with an addition of a friction-reducing substance, such as Teflon powder.

The invention has been described above in connection with the embodiments shown in the drawings. It can, however, be varied in a number of respects within the scope of the patent claims below. The technique described can therefore also be used for other sealing rings with other configurations and intended for other applications than those described above. The necessary modifications can then be performed easily by a person skilled in the art. In this connection, the material combinations can also be changed if so desired or required, and the indicated material thicknesses and hardnesses can be varied depending on the circumstances.

## Claims

1. A method for manufacturing an elastic sealing ring for sealing between a displaceable and/or rotatable component, such as a piston, piston rod, shaft etc., and a surrounding component, such as a cylinder block, a cylinder end wall etc., which sealing ring is adapted so as to be mounted in a groove in one component and has at least one sealing surface intended for bearing against the other component, **characterized in that** the sealing ring is manufactured by sequential injection of two materials with different properties into a common mold cavity for simultaneous molding of the two materials to form a blank having a dish shaped part and an outer annular part, said blank comprising an inner core made of a first material with first properties and an outer layer made of a second material with, in part, second properties encasing the core, wherein said second material is injected into the mold first, after which said first material is injected centrally into the mold, so that it forces the second material against the delimiting surfaces of the mold cavity in such a way as to be completely encased by an outer layer so realized of the second material, and by cutting away the dish shaped part to obtain an annular seal having at least one lip the extremity of which is defined by the sectional surface obtained by said cutting.

2. The method as claimed in claim 1, **characterized in that**, as said second material, a material is injected which gives lower friction on contact with a component bearing against it than the first material.

3. The method as claimed in claim 1 or 2, **characterized in that**, as said second material, a material is injected which has a greater hardness than the first material.

4. The method as claimed in any one of claims 1-3, **characterized in that** the peripheral outer edge portion of the blank is essentially V-shaped or U-shaped with two sealing lips for forming a pressure seal for a piston rod or the like, and **in that** the dish shaped part is cut away, so that the other end of the annular product obtained is shaped to form a piston rod wiper lip.

5. The method as claimed in claim 4, **characterized in that** the annular product is shaped so that the thickness of the part which connects the two pressure seal lips to the piston rod wiper lip is relatively small.

6. An elastic sealing ring for sealing between a displaceable and/or rotatable component, such as a piston (2), piston rod (3), shaft etc., and a surrounding component, such as a cylinder block (1), a cylinder end wall etc., which sealing ring (16; 22) is adapted so as to be mounted in a groove in one component, has at least one sealing surface (19; 25, 26; 28; 31, 32) intended for bearing against the other component, and comprises first and second materials, respectively, with different properties, **characterized in that** it has an internal core (17) of the first material and an external layer (18) of the second material molded together, that the core is completely surrounded by the external layer except for at a sectional surface where the sealing ring (16, 22) has been separated from a sprue dish (20), and **in that** the sealing ring has at least one lip the extremity of which is defined by said sectional surface.

7. The sealing ring as claimed in claim 6, **characterized in that** said second material has lower friction on contact with a component part bearing against it than the first material.

8. The sealing ring as claimed in claim 6 or 7, **characterized in that** said second material has a greater hardness than the first material.

9. The sealing ring as claimed in any one of claims 6-8, **characterized in that** one end of the ring is essentially V-shaped or U-shaped with two sealing lips (31, 32) for forming a pressure seal for a piston rod (3) or the like, and **in that** the other end of the ring is shaped as a piston rod wiper lip (28).

10. The sealing ring as claimed in claim 9, **characterized in that** the thickness of that part (33) of the ring which connects the two pressure seal lips (31, 32) to the piston rod wiper lip (28) is relatively small.

11. The sealing ring as claimed in any one of claims 8-10, **characterized in that** the thickness of said outer layer (18) with the greater hardness is of the order of 0.2-0.6 mm, preferably roughly 0.4 mm.

12. The sealing ring as claimed in any one of claims 8-11, **characterized in that** said first material (17) has a hardness of the order of 40-70° Shore D, preferably roughly 50-60° Shore D, and **in that** said second material (18) has a hardness of the order of 85-95° Shore D, preferably roughly 90-93° Shore D.

## Patentansprüche

1. Verfahren zur Herstellung eines Dichtungsrings zum Abdichten zwischen einem verschiebbaren und/oder drehbaren Bauteil, wie z.B. einem Kolben, einer Kolbenstange, einem Schaft usw., und einem umgebenden Bauteil, wie z.B. einem Zylinderblock, einer Zylinderendwand usw., wobei der Dichtungsring angepasst ist, in einer Nut in einem Bauteil montiert zu werden, und mindestens eine Dichtungsoberfläche aufweist, die zum Abstützen gegen das andere Bauteil bestimmt ist, **dadurch gekennzeichnet, dass** der Dichtungsring durch aufeinander folgendes Einspritzen von zwei Materialien mit unterschiedlichen Eigenschaften in eine gemeinsame Formhöhlung hergestellt wird zum gleichzeitigen Formen der zwei Materialien, um einen Rohling zu bilden, welcher einen schalenförmigen Teil und einen äußeren ringförmigen Teil aufweist, wobei der Rohling einen inneren Kern aufweist, hergestellt aus einem ersten Material mit ersten Eigenschaften, und eine äußere Schicht, hergestellt aus einem zweiten Material mit teilweise zweiten Eigenschaften, die den Kern umgibt, wobei das zweite Material zuerst in die Form eingespritzt wird, wonach das erste Material mittig in die Form eingespritzt wird, so dass es das zweite Material gegen die Grenzoberflächen der Formhöhlung auf solch eine Weise zwingt, um vollständig durch eine äußere Schicht umgeben zu sein, die derart aus dem zweiten Material realisiert ist, und durch Wegschneiden des schalenförmigen Teils, um eine ringförmige Dichtung zu erhalten, welche mindestens eine Lippe aufweist, deren Ende durch die sektionale Oberfläche definiert ist, die durch das Schneiden erhalten wird.

2. Verfahren nach Anspruch 1, **dadurch gekennzeichnet, dass** als zweites Material ein Material eingespritzt wird, welches eine niedrigere Reibung in Kontakt mit einem Bauteil ergibt, das sich gegen es abstützt, als das erste Material.

3. Verfahren nach Anspruch 1 oder 2, **dadurch gekennzeichnet, dass** als zweites Material ein Material eingespritzt wird, welches eine größere Härte als das erste Material aufweist.

4. Verfahren nach irgendeinem der Ansprüche 1 bis 3, **dadurch gekennzeichnet, dass** der periphere äußere Kantenabschnitt des Rohlings im Wesentlichen V-förmig oder U-förmig ist mit zwei Dichtungslippen zum Bilden einer Druckdichtung für eine Kolbenstange oder ähnliches und dass der schalenförmige Teil weggeschnitten wird, so dass das andere Ende des erhaltenen ringförmigen Produkts geformt ist, um eine Kolbenstangen-Abstreiflippe zu bilden.

5. Verfahren nach Anspruch 4, **dadurch gekennzeichnet, dass** das ringförmige Produkt derart geformt ist, dass die Dicke des Teils, welches die zwei Druckdichtungslippen mit der Kolbenstangen-Abstreiflippe verbindet, relativ gering ist.

6. Elastischer Dichtungsring zum Abdichten zwischen einem verschiebbaren und/oder drehbaren Bauteil, wie z.B. einem Kolben (2), einer Kolbenstange (3), einem Schaft usw., und einem umgebenden Bauteil, wie z.B. einem Zylinderblock (1), einer Zylinderendwand usw., wobei der Dichtungsring (16; 22), welcher angepasst ist, in einer Nut in einem Bauteil montiert zu werden, mindestens eine Dichtungsoberfläche (19; 25, 26; 28; 31, 32) aufweist, die zum Abstützen gegen das andere Bauteil bestimmt ist und jeweils ein erstes und ein zweites Material aufweist mit verschiedenen Eigenschaften, **dadurch gekennzeichnet, dass** er einen inneren Kern (17) aus dem ersten Material und eine äußere Schicht (18) aus dem zweiten Material aufweist, die zusammen geformt sind, dass der Kern vollständig durch die äußere Schicht umgeben ist, außer an einer sektionalen Oberfläche, wo der Dichtungsring (16, 22) von einer Angussschale (20) abgetrennt worden ist, und dass der Dichtungsring mindestens eine Lippe aufweist, deren Ende durch die sektionale Oberfläche definiert wird.

7. Dichtungsring nach Anspruch 6, **dadurch gekennzeichnet, dass** das zweite Material eine geringere Reibung in Kontakt mit einem Bauteil aufweist, das sich gegen es abstützt, als das erste Material.

8. Dichtungsring nach Anspruch 6 oder 7, **dadurch gekennzeichnet, dass** das zweite Material eine größere Härte als das erste Material aufweist.

9. Dichtungsring nach irgendeinem der Ansprüche 6 bis 8, **dadurch gekennzeichnet, dass** ein Ende des Rings im Wesentlichen V-förmig oder U-förmig ist mit zwei Dichtungslippen (31, 32) zum Bilden einer Druckdichtung für eine Kolbenstange (3) oder ähnliches, und dass das andere Ende des Dichtungsrings als eine Kolbenstangen-Abstreiflippe (28) geformt ist.

10. Dichtungsring nach Anspruch 9, **dadurch gekennzeichnet, dass** die Dicke des Teils (33) des Rings, welcher die zwei Druckdichtungslippen (31, 32) mit der Kolbenstangen-Abstreiflippe (28) verbindet, relativ gering ist.

11. Dichtungsring nach irgendeinem der Ansprüche 8 bis 10, **dadurch gekennzeichnet, dass** die Dicke der äußeren Schicht (18) mit der größeren Härte in der Größenordnung von 0,2-0,6 mm, vorzugsweise in etwa bei 0,4 mm liegt.

12. Dichtungsring nach irgendeinem der Ansprüche 8 bis 11, **dadurch gekennzeichnet, dass** das erste Material (17) eine Härte in der Größenordnung von 40-70° Shore D, vorzugsweise in etwa 50-60° Shore D aufweist und dass das zweite Material (18) eine Härte in der Größenordnung von 85-95° Shore D, vorzugsweise in etwa 90-93° Shore D aufweist.

## Revendications

1. Procédé de fabrication d'une bague d'étanchéité élastique destinée à assurer l'étanchéité entre un composant que l'on peut déplacer et/ou faire tourner, comme un piston, une tige de piston, un arbre, etc., et un composant qui l'entoure, comme un bloc de culasse, une paroi d'extrémité de cylindre etc., laquelle bague d'étanchéité est prévue pour être montée dans une rainure pratiquée dans un composant et possède au moins une surface d'étanchéité prévue pour s'appuyer contre l'autre composant, **caractérisé en ce que** la bague d'étanchéité est obtenue par injection séquentielle de deux matériaux avec des propriétés différentes dans une cavité de moulage commune destinée au moulage simultané des deux matériaux pour former une ébauche possédant une partie en forme de cuvette et une partie annulaire extérieure, ladite ébauche comprenant un noyau intérieur constitué d'un premier matériau ayant des premières propriétés et une couche extérieure constituée d'un deuxième matériau ayant partiellement des deuxièmes propriétés et enfermant le noyau, dans lequel le deuxième matériau est injecté dans le premier moule, après quoi ledit premier matériau est injecté au centre du moule de façon à ce qu'il force le deuxième matériau contre les surfaces délimitant la cavité de moulage de manière à ce qu'il soit complètement enfermé par une couche extérieure ainsi formée par le deuxième matériau, et **en ce que** l'on découpe la partie en forme de cuvette pour obtenir un joint d'étanchéité annulaire ayant au moins une lèvre dont l'extrémité est formée par la surface de section obtenue par ladite découpe.

2. Procédé selon la revendication 1, **caractérisé en ce qu'**on injecte comme dit deuxième matériau un matériau qui donne moins de friction au contact d'un composant contre lequel il s'appuie que le premier matériau.

3. Procédé selon la revendication 1 ou 2, **caractérisé en ce qu'**on injecte comme dit deuxième matériau un matériau qui a une plus grande dureté que le premier matériau.

4. Procédé selon l'une quelconque des revendications 1 à 3, **caractérisé en ce que** la partie de bord périphérique extérieur de l'ébauche a sensiblement une forme en V ou une forme en U avec deux lèvres d'étanchéité pour former un joint d'étanchéité à la pression pour une tige de piston ou similaire, et **en ce que** la partie en forme de cuvette est découpée de façon à ce que l'autre extrémité du produit annulaire ainsi obtenu est configurée pour former une lèvre racleuse de tige de piston.

5. Procédé selon la revendication 4, **caractérisé en ce que** le produit annulaire est configuré de façon à ce que l'épaisseur de la partie reliant les deux lèvres d'étanchéité à la pression à la lèvre racleuse de tige de piston soit relativement petite.

6. Bague d'étanchéité élastique destinée à assurer l'étanchéité entre un composant que l'on peut déplacer et/ou faire tourner, comme un piston (2), une tige de piston (3), un arbre, etc., et un composant qui l'entoure comme un bloc de culasse (1), une paroi d'extrémité de cylindre etc., laquelle bague d'étanchéité (16 ; 22) est prévue pour être montée dans une rainure d'un composant et possède au moins une surface d'étanchéité (19 ; 25, 26 ; 28 ; 31, 32) prévue pour s'appuyer contre l'autre composant, et comprend respectivement des premier et deuxième matériaux de propriétés différentes, **caractérisée en ce qu'**elle possède un noyau intérieur (17) du premier matériau et une couche extérieure (18) du deuxième matériau moulés conjointement, **en ce que** le noyau est complètement entouré par la couche extérieure sauf au niveau d'une surface en coupe où la bague d'étanchéité (16, 22) a été séparée d'une cuvette de carotte (20), et **en ce que** la bague d'étanchéité possède au moins une lèvre dont l'extrémité est définie par ladite surface en coupe.

7. Bague d'étanchéité selon la revendication 6, **caractérisée en ce que** ledit deuxième matériau a une friction inférieure au contact d'une partie de composant contre lequel il s'appuie à celle du premier matériau.

8. Bague d'étanchéité selon la revendication 6 ou 7, **caractérisée en ce que** ledit deuxième matériau a un dureté supérieure à celle du premier matériau.

9. Bague d'étanchéité selon l'une quelconque des revendications 6 à 8, **caractérisée en ce qu'**une extrémité de la bague a sensiblement une forme en U ou une forme en V avec deux lèvres d'étanchéité (31, 32) destinées à former un joint d'étanchéité à la pression pour une tige de piston (3) ou similaire, et **en ce que** l'autre extrémité de la bague est configurée comme une lèvre racleuse (28) de tige de piston.

10. Bague d'étanchéité selon la revendication 9, **caractérisée en ce que** l'épaisseur de la partie (33) de la bague qui relie les deux lèvres d'étanchéité à la pression (31, 32) à la lèvre racleuse (28) de tige de piston est relativement petite.

11. Bague d'étanchéité selon l'une quelconque des revendications 8 à 10, **caractérisée en ce que** l'épaisseur de ladite couche extérieure (18) de plus grande épaisseur est de l'ordre de 0,2 à 0,6 mm, de préférence d'environ 0,4 mm.

12. Bague d'étanchéité selon l'une quelconque des revendications 8 à 11, **caractérisée en ce que** ledit premier matériau (17) a une dureté de l'ordre de 40 à 70° Shore D, de préférence d'environ 50 à 60° Shore D, et **en ce que** ledit deuxième matériau (18) a une dureté de l'ordre de 85 à 95° Shore D, de préférence d'environ 90 à 93° Shore D.
